Europäisches Patentamt

**European Patent Office**

**Office européen des brevets**

(11) Publication number: **0 023 834**
A2

# EUROPEAN PATENT APPLICATION

(21) Application number: **80302654.1**

(22) Date of filing: **04.08.80**

(51) Int. Cl.³: **G 01 H 9/00, G 02 F 1/21**

(30) Priority: **03.08.79 US 63504**

(43) Date of publication of application: **11.02.81**
**Bulletin 81/6**

(84) Designated Contracting States: **DE FR**

(71) Applicant: **SPERRY CORPORATION, 1290 Avenue of the Americas, New York, N.Y. 10019 (US)**

(72) Inventor: **McMahon, Donald Howland, Judy Farm Road, Carlisle Massachusetts (US)**

(74) Representative: **Singleton, Jeffrey et al, Sperry Gyroscope Patent Department Downshire Way, Bracknell, Berkshire, RG12 1QL (GB)**

(54) **Fiber optic transducers.**

(57) A fiber optic transducer for sensing ambient conditions by converting small displacements into light intensity variations comprises first and second optical signal transmission lines (21, 23) each of transparent material with a refractive index $n_1$ and a planar end face (26, 27) oriented at an angle with respect to the longitudinal axis; means for positioning said end faces (26, 27) in a substantially parallel relationship and separated by a transparent material with a refractive index $n_2$ less than $n_1$, a distance (d) that is variably dependent on variations caused by said ambient condition to be sensed, said distance (d) having a maximum of the order of a wavelength, in the separating material, of an optical signal to be propagated in said transmission line; said angle of said end faces being determined such that at least one light ray of an optical signal propagating within said first and second transmission lines (21, 23) is incident thereto at angle of incidence greater than the critical angle for an interface between transparent materials with refractive indices $n_1$ and $n_2$, respectively.

- 1 -

## FIBER OPTIC TRANSDUCERS

The present invention relates to transducers and more particularly, to a transducer which converts small displacements into light intensity variations.

Underwater target locating systems may utilize active acoustic devices, which comprise a radiation source and a receiver to detect reflected sound energy, or passive devices which detect sound energy radiated from distant sources. The information obtained with active and passive systems is the same; mainly they determine the relative position of a multiplicity of dispersed discrete targets in a quiescent water ambient. Passive underwater locating systems are generally preferred for military applications. Since target position cannot be determined passively with a single acoustic receiver (hydroplane), a passive system requires a multiplicity of hydrophones, the minimum number to determine the position in one plane being three, one at each position at the vertices of an equiangular triangle. These systems determine the relative position of a target by frequency filtering the target signal received at each sensor from the background noise, determining the relative phases of the filtered signal between sensors, and processing this phase information to obtain the relative range and angle location. Large numbers of hydrophones, 100 and 1000, are typically utilized in a one or two dimensional array to provide sufficient systems signal sensitivity in the presence of noise and to provide a desired angular resolution over a broad acoustic frequency band.

Acoustic transducers of the prior art utilize piezoelectric crystals or ferroelectric ceramics to transform acoustic signals into electrical signals by converting pressure variations into corresponding voltage variations across electrodes positioned on opposite sides of the material. These transducers typically supply very small voltages at very high impedance levels. Generally the transducer is coupled to an amplifier via a long wire or coaxial cable, the capacitance of which is charged by the voltage across the output terminals of the crystal, causing the voltage response, due to a given pressure wave, to be greatly reduced. This reduction in sensitivity may be eliminated by positioning a transimpedance amplifier in close proximity to the transducer which amplifies the signal and transforms the high output impedance of the transducer to a low impedance which is coupled to the input terminals of the transmission line. The transimpedance amplifier eliminates the decreased signal caused by the capacitance of the transmission line, thus permitting the amplified signal to be transmitted with little loss over long lengths of line.

Due to the complexity of hydrophone arrays their costs generally are excessive. Moreover, the large number of electronic components, each having finite failure rates, utilized in the array make it near impossible to maintain all parts of such a complicated system in perfect working order for more than a few hours. In view of the deficiencies of the prior art transducer, efforts have been expended to develop electrically passive acoustic transducers utilizing fiber optic techniques. Fiber optic systems eliminate active components at the transducer, provide higher bandwidth, smaller cable diameter, lower weight, and lower cost. Generally the effort expended on fiber optic transducers has been in the area of single mode interferometric devices. These devices, however, require long lived laser sources, single mode, single polarization fibers, and low loss single mode connectors, each of which require advances in the state of the art before practical elements utilizable in a fiber optic transducer system can be developed. Additionally, single mode interferometric systems exhibit relatively high sensitivity to ambient pressure head and temperature variations. Of all the problems that exist in prior art fiber optic sonar transducers, reduction of phase variations caused by the sensitivity of the single mode fiber to the same pressure head and temperature variations, is the most severe. Ambient phase variations produced in the fiber optic cable may be minimized by increasing the length of the fiber at the transducer. This increase, however, creates more severe pressure head and temperature induced phase variations in the transducer for which compensation via electrically active feed back control systems may be required. The limitations of single mode interferometric sensor systems are overcome with the present invention by utilizing multimode fibers and devising an intensity modulation technique that is compatible therewith.

A preferred fiber optic transducer constructed according to the principles of the present invention includes two optical fibers with the end faces thereof cut and polished at an angle with respect to their axes such that the light propagating in the fiber is incident to the end face at angles that are greater than the critical angle for the interface between the fiber medium and free space such that total internal reflection takes place at the interface. The axes of the two fibers are positioned on a common line with the canted end faces thereof in close proximity. This arrangement causes light propagating in the input fiber to be totally internally reflected by the canted end face if the spacing between the end faces is large compared to the free space wavelength of the propagating light. When the separation is less than approximately one wavelength, coupling between the fibers is realized with the coupled intensity increasing with decreasing separation. Ambient condition changes, such as pressure variations resulting from acoustic waves propagating in the vicinity of the pressure sensing device cause the pressure sensing device to create variations in the fiber end separations, thus producing an intensity modulation of the light coupled from the input through to the output optical fiber.

Further in accordance with the invention, a fiber optic transducer may include an optical fiber, one end of which is cut and polished at two angles of $45^{\circ}$ with respect to the axis of the fiber, creating two end faces which form an apex angle on the axis that reflects light, after two reflections, back towards the input end of the fiber. An optical material, with a refractive index substantially equal to refractive index of the fiber, is positioned such that one surface is substantially parallel to one of the end faces with a separation therebetween. When the separation between the one end face and the surface of the optical material is greater than a wavelength of the optical signals propagating within the fiber, the optical signals incident to the one end face will be totally reflected therefrom towards the second end face and therefrom towards the input end of the fiber. When the separation between the one end face and the optical material is less than a wavelength of the propagating signals, light energy is coupled to the optical material, the percentage of the incident energy coupled increasing with decreasing separation, thus reducing the intensity of the light returned to the input end. Placing the optical fiber and the optical material in a device that causes variations in the distance between the one end face and the optical material as a result of ambient condition changes will cause a variation in the intensity of the light beam that is reflected towards the input end.

Optical transducers constructed in accordance with the present invention will now be described, in greater detail, with reference to the accompanying drawings, in which:-

Figure 1, useful for explaining the invention, is a representation of two optical fibers with end faces cut at an angle with respect to the fiber axes and separated by a given distance,

Figure 2 is a schematic representation of a one embodiment of the invention,

Figure 3 is a schematic representation of a second embodiment of the invention, and

Figure 4 is a schematic representation of a third embodiment of the invention.

When light is propagated from an optically denser medium into one which is optically less dense, as for example, from a medium with refractive index n, greater than one, to an air medium with refractive index one, at an angle of incidence $\psi_i$ to the boundary of the media that is greater than the critical angle $\psi_c$ defined by $\sin \psi_c = \frac{1}{n}$, no light enters the second medium. All the incident light is reflected back into the first medium and the total internal reflection occurs. The electromagnetic propagation in the second medium, however, does not disappear, only there is no longer a flow of energy across the boundary. Under these circumstances, a non-homogeneous wave is propagated along the boundary in the plane of incidence, the amplitude of which decays exponentially with the distance from the boundary. This amplitude decreases very rapidly with the depth of penetration, the effective depth of penetration being of the order of a wave length $\lambda$ of the light incident to the boundary.

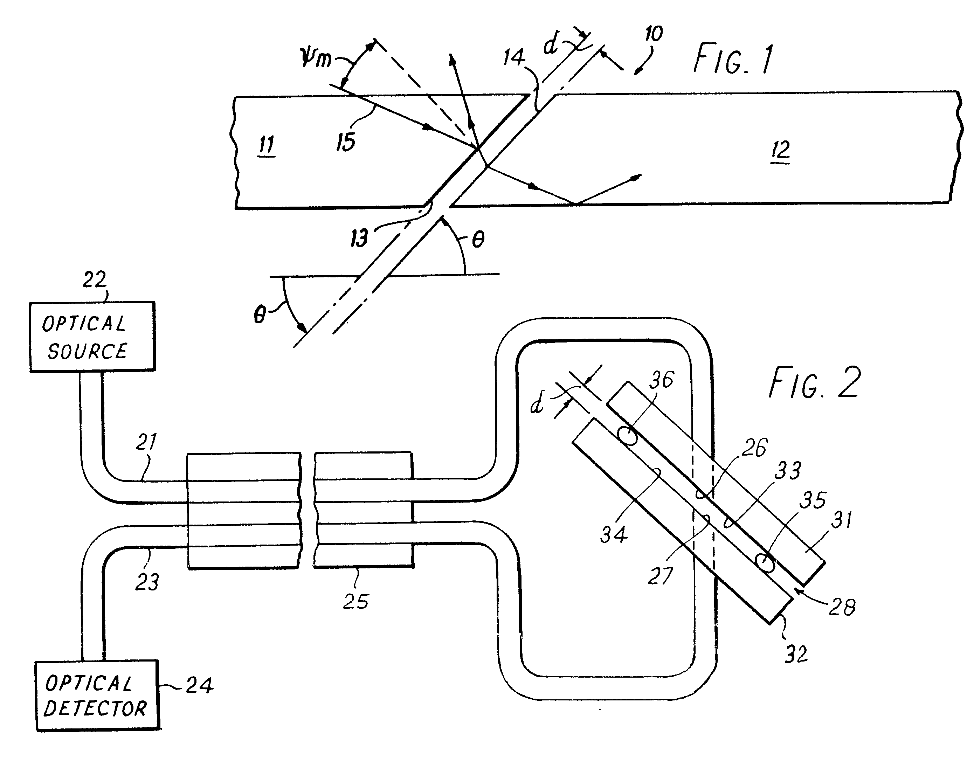

Referring to Figure 1 which schematically shows the structure of a junction 10 that may be utilised as a central component of the invention, two optical fibers 11 and 12 each with an index of refraction $n_1$ are cut and polished at their ends to establish end faces 13 and 14 at an acute angle $\theta$ with the respective fiber axis. The fibers are positioned with the end faces 13 and 14 spaced a small distance d apart and the axes desirably located along a common line. If the spacing "d" is large compared to a wave length and the angle $\theta$ is selected such that the minimum incident angle $\psi_m$, relative to the normal line 13a, of an optical signal to the end face 13, along for example, the propagation path 15, is greater than the critical angle, all optical signals propagating within the fiber 11 will be internally reflected. If the distance d is decreased to be less than a wavelength, some fraction of the light will be transmitted through the gap to enter and propagate in the optical fiber 12. The percentage of light transmitted to the optical fiber 12, for each angle of incidence greater than the minimum angle $\psi_m$, may be determined from:

$$T = 1 - \left| \frac{\left(\mu^2 + \omega^2\right)^2}{\left(\mu^2 - \omega^2\right)^2 + 4\,\mu^2\,\omega^2\,\coth^2 \beta d} \right|$$

Where for perpendicular polarization

$$\mu^2 = n^2 \cos^2 \psi$$

$$\omega^2 = n^2 \sin^2 \theta - 1$$

$$\beta = \frac{2\pi}{\lambda} \sqrt{n^2 \sin^2 \theta - 1}$$

and for parallel polarization

$$\mu^2 = \frac{\cos^2 \psi}{n^2}$$

$$\omega^2 = n^2 \sin^2 \theta - 1$$

$$\beta = \frac{2\pi}{\lambda} \sqrt{n^2 \sin^2 \theta - 1}$$

Referring to Figure 2, a fiber optic sonar transducer 20 may comprise an input optical fiber 21 coupled at the input end to an optical source 22 and an output optical fiber 23 coupled at the output end thereof to an optical detector 24. The output end face 26 of input fiber 21 and the input end face 27 of output fiber 23 are cut and polished at an angle for total internal reflection as previously described. Fibers 21 and 23 may extend through a cable 25 respectively to plates 31 and 32 of a sensor 28, which may, for example, be a two plate pressure sensing device, whereat the end faces 26 and 27 are held flush with the edges 33 and 34 of the plates 31 and 32 respectively. Edges 33 and 34 are held parallel while the distance therebetween is allowed to vary, as a function of pressure from very small fractions of a free space wavelength to approximately one wavelength by compliance members 35 and 36. With this arrangement an acoustic wave incident to the pressure sensor 28 causes a variation in the distance between the surfaces 33 and 34 of the plates 31 and 32, thereby varying the total light energy transmitted from the end space 26 of the input optical fiber 21 through the end face 27 of the output optical fiber 23, thus causing the light signals incident to the optical detector 24 to be amplitude modulated.

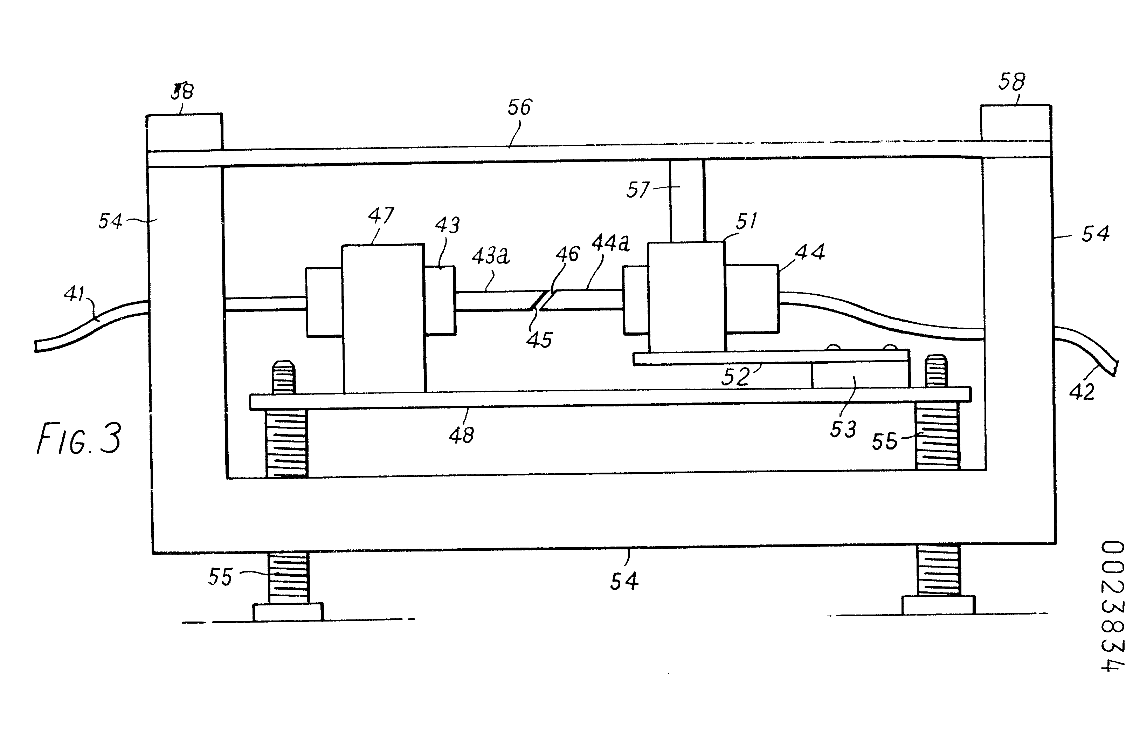

Another embodiment of the invention is shown in Figure 3. An input optical fiber 41 and an output optical fiber 42 may be inserted into brass ferrules 43 and 44 and along the entire length of cantilevered extensions 43a and 44a thereof respectively and bonded therein, as for example with Torr Seal Epoxy. The ends of the cantilevered extensions 43a and 44a may then be cut and polished such that end faces 45 and 46 of the fibers 41 and 42 respectfully form a desired acute angle with the fiber axis as previously described. Ferrule 43 may be secured in a holder 47 which in turn may be bonded to a base plate 48, while ferrule 44 may be secured in a holder 51 which in turn may be attached near one end of a spring 52. Spring 52 may be secured at the other end to a spacing block 53, the height of which is adjusted to obtain proper alignment of the end faces 45 and 46 and positioned on the base plate 48 to obtain a desired spacing between end faces 45 and 46. Base plate 48 may be placed in a housing 54 on adjusting screws 55 extending through the base of the housing 54. Holder 51 may be coupled to a diaphram 56 via plunger 57. Diaphram 56 may be sealed to the housing 54 with a retaining ring 58. Maximum sensitivity to the diaphram pressure may be obtained by adjusting the screws 55 in the base of the housing 54. In operation optical signals are caused to propagate through input fiber 41 towards the end face 45 thereof. Variations in ambient conditions, as for example, pressure applied through the diaphram 56 cause variations in the spacings between the end faces 45 and 46 thus resulting in the propagation of an amplitude modulated optical signal in the output fiber 42 as previsouly described.

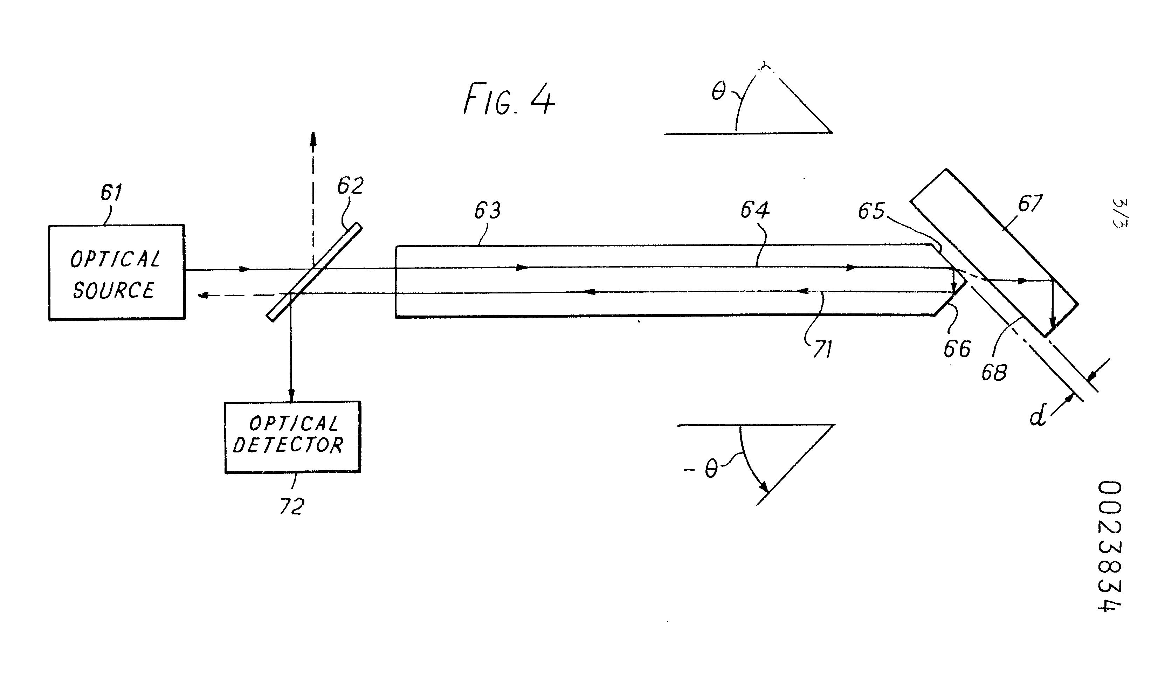

A single fiber acousto-optic transducer in accordance with the present invention is shown schematically in Figure 4. Optical signals from an optical source 61 are coupled through a beam splitter 62 and caused to propagate in an optical fiber 63 along a path 64, for example. Optical fiber 63 is cut and polished to establish end faces 65 and 66 which form angles of 90° with respect to each other and 45° with respect to the axis of the optical fiber 63. The numerical aperture of the fiber is limited to a value such that the angle of incidence to the end faces 65 and 66 for substantially all permissible propagation paths within the optical fiber 63 are greater than the critical angle for the interface between a medium having an index of refraction of fiber 63 and air. A block of optical material 67 having an index of refraction approximately equal to or greater than the index and refraction of the fiber core 63 is positioned such that a flat surface 68 thereof is substantially parallel to an end face of the optical fiber 63, as for example, end face 65, with a spacing d therebetween. When the spacing d is less than a wavelength of the optical signal propagating within the optical fiber 63, light incident to the end face 65, as for example along the optical path 64, is reflected therefrom to be incident to the end face 66, and reflected from the end face 66 towards the input end of the fiber, as for example along the path 71. Reflected light emerging from the optical fiber 63 is then incident to the beam splitter 62 and a portion thereof is reflected towards an optical detector 72. As the distance between the end face 65 and the surface 68 decreases, increasing proportions of optical energy are coupled across the gap into the optical material 67, causing the optical energy reflected from the end face 65, towards the end face 66 to decrease, thus resulting in a decrease in the optical signal detected by the optical detector 72. It should be apparent to those skilled in the art that positioning the optical material 67 and the optical fiber 63 in the ferrules 43 and 44 of Figure 3 and locating the device so formed in an acoustic field will result in an amplitude modulated light beam incident to the optical detector 72.

While the invention has been described in its preferred embodiments, it is to be understood that the words that have been used are words of description rather than of limitation and that changes within the purview of the appended claims may be made without departing from the true scope and spirit of the invention in its broader aspects.

## CLAIMS

1. A fiber optic transducer for sensing ambient conditions by converting small displacements into light intensity variations comprising:

first and second optical signal transmission lines each of transparent material with a refractive index $n_1$ and a planar end face oriented at an angle with respect to the longitudinal axis;

means for positioning said end faces in a substantially parallel relationship and separated by a transparent material with a refractive index $n_2$ less than $n_1$, a distance that is variably dependent on variations caused by said ambient condition to be sensed, said distance having a maximum of the order of a wavelength, in the separating material, of an optical signal to be propagated in said transmission line;

said angle of said end faces being determined such that at least one light ray of an optical signal propagating within said first and second transmission lines is incident thereto at an angle of incidence that is greater than the critical angle for an interface between transparent materials with refractive indexes $n_1$ and $n_2$, respectively.

2. A fiber optic transducer in accordance with claim 1 wherein said positioning means includes:

first and second plates adapted for extending said first and second optical transmission lines therethrough; and

means for maintaining said end faces of said first and second optical transmission lines in substantially parallel relationship and for providing a variable spacing therebetween.

3. A fiber optic transducer in accordance with claim 1 wherein said positioning means comprises:

first and second means for holding said first and second optical transmission lines respectively;

spring means for resiliently mounting said second holding means,

means for mounting said first holding means and said spring means such that said end faces are positioned in said substantially parallel relationship with said separation therebetween; and

means for sensing ambient conditions and for transmitting to said reiliently mounted second holding means incremental displacements caused thereby.

4. A fiber optic transducer in accordance with claim 3 further including a housing having a base and a circumferential wall about an internal volume wherein said mounting means with said first holding means and said spring mounted second holding means are adjustably set on said base and whereon said ambient condition sensing means is attached to the top of said circumferential wall and freely extends across said internal volume.

5. A fiber optic transducer in accordance with claims 1, 2, 3 or 4 wherein said first and second optical transmission lines are optical fibers and said index of refraction $n_2$ is substantially equal to one.

6.    A fiber optic transducer for sensing ambient conditions by converting small displacements into light intensity variations comprising:

an optical transmission line having a refractive index $n_1$ and a longitudinal axis and extending from an input end to first and second planar end faces that form equal and opposite angles with respect to said longitudinal axis, said end faces arranged and constructed such that at least one light ray of an optical signal propagating within said optical transmission line is incident to said first end face at an angle that is greater than the critical angle for an interface between transparent materials having refractive indexes $n_1$ and $n_2$ less than $n_1$ and such that light and rays reflected from said first end face are incident to said second end face and reflected therefrom towards said input end; and

an optical material having a planar surface and a refracted index substantially equal to said refracted index $n_1$ positioned such that said planar surface is substantially in parallel relationship with said first end face and separated by a transparent media having said refractive index $n_2$ less than $n_1$ by a distance variable in response to changes in said ambient conditions.

*FIG. 1*

*FIG. 2*

OPTICAL SOURCE

OPTICAL DETECTOR

FIG.3

0023834

FIG. 4